# EUROPEAN PATENT SPECIFICATION

(11) **EP 2 725 514 B1**
(45) Date of publication and mention of the grant of the patent: **10.03.2021**
(21) Application number: 13150542.2
(22) Date of filing: 08.01.2013
(51) Int. Cl.: G06F 21/62

(54) **Security information sharing system and execution method thereof**
System zum Teilen von Sicherheitsinformation und Ausführungsverfahren dafür
Système de partage d'informations de sécurité et procédé d'exécution de celui-ci

(30) Priority: 29.10.2012 TW 101139928
(43) Date of publication of application: 30.04.2014
(73) Proprietor: Walton Advanced Engineering Inc., Kaohsiung City 80681 (TW)
(72) Inventor: Yu, Hong-Chi, Kaohsiung City 80681 (TW); Chang, Mao-Ting, Kaohsiung City 80681 (TW)
(74) Representative: Cabinet Chaillot

(56) References cited:
- WO-A1-2010/030157
- WO-A1-2012/034250
- GB-A- 2 377 043
- US-A1- 2006 272 031
- US-A1- 2007 016 800
- US-A1- 2007 156 850
- US-A1- 2010 011 427

## Description

### BACKGROUND OF THE INVENTION

### 1) FIELD OF THE INVENTION

The present invention relates to an information sharing system, particularly an information sharing system based on a digital key for digitalized security certification.

### 2) DESCRIPTION OF THE PRIOR ART

The popularity of Internet has driven prevalence of multiple cloud applications, particularly three most significant characteristics such as convenient remote data storage and sharing, simple and low-cost remote applications, and low-power remote computing in existing environment.

Among various portable devices as tools for data storage / sharing currently, a USB flash disk is the most popular tool for delivery of data/files between computers. A user who intends to copy any data/file of Computer A into Computer B should electrically connect a USB flash disk to Computer A prior to data of Computer A saved in the USB flash disk and then electrically connect the USB flash disk to Computer B for stored data copied or moved to Computer B for the data/file in Computer A shared by Computer B.

However, there are still some problems existing in the method for files transmitted between computers by a USB flash disk in contrast to remote data storage and sharing: (1) Data/file not immediately, efficiently and conveniently shared due to an actual distance between computers ; (2) Data transfer efficiency simply reduced by 50% during a procedure of the same data/file transmitted twice in the way of a two-stage "copy in & copy out" for the data/file accessed by a USB flash disk; (3) Difficulty in confused versions of any data/file which has been duplicated multiply; (4) Failure in backup of any data/file with its version not effectively controlled by one user.

Practically, security in data transmission and loss of individual privacy in data storage still exist in cloud-based remote data storage / sharing: (a) data transmission: digital packets transmitted via Internet are possibly intercepted in cloud applications; (b) data storage: data saved in plain codes is accessed by any user with the authority.

Accordingly, the above problems should be overcome to prevent any cloud-based application for remote data storage and sharing from threats.

US patent No. 2007/016800 A1 discloses a system and a method for programming a data storage device with a password. Specifically, it discloses a method comprising initiating a password programming routing for a data storage device, and programming the data storage device with the password associated with an external storage medium, wherein the data storage device is configured to condition access to the data stored on the data storage device based on the password.

### SUMMARY OF THE INVENTION

To settle the above problems, the present invention provides a security information sharing system and an execution method thereof as defined in claim 1. The security information sharing system realizes information sharing based on Internet or Local Area Network and comprises at least a digital key and a digital box: (a) A digital key's USB connector is inserted into a terminal device's USB port; (b) A certification program is executed by the terminal device; (c) A verification code created by the certification program is passed to a decoding program via a connection unit of the terminal device and a network unit; (d) The verification code is compared with a data storage device; (e) The data storage device is accessed by the terminal device via the network unit.

The object of the present invention is to provide a security information sharing system and an execution method thereof for secure information sharing and protective data transmission between a digital box and a digital key and no data loss.

The other object of the present invention is to provide a security information sharing system and an execution method thereof which depends on a digital key for certification and saves time spent in entering a username and a password as usual.

The further object of the present invention is to provide a security information sharing system and an execution method thereof which depends on a digital key for certification without remembering a username and a password as usual.

The yet other object of the present invention is to provide a security information sharing system and an execution method thereof which ensures a data storage device is not directly accessed under effect of a decoding program's encryption functions.

The yet still other object of the present invention is to provide a security information sharing system and an execution method thereof which makes use of a digital box's device number and a certification program to create a new authorized digital key.

The yet still further object of the present invention is to provide a security information sharing system and an execution method thereof which depends on a synchronous program to backup encoded data of a data storage device into a remote server.

The yet still further object of the present invention is to provide a security information sharing system and an execution method thereof which relies on a digital box in Local Area Network, reducing bandwidth to upload data to a remote server from a local terminal device via Internet.

The present invention adopts major technical measures as follows to fulfill the above purposes. As a security information sharing system based on Internet or Local Area Network, the present invention comprises at least a digital key and a digital box. The digital key comprises a USB connector, a first memory unit, a control unit, a first substrate, and a verification code saved in the first memory unit: the USB connector is electrically connected to the first memory unit and the control unit via the first substrate; the digital box comprises at least a data interface, a second memory unit, a processing unit, a second substrate, a network unit, a data storage device and a power unit wherein the data interface, the second memory unit, the processing unit, the network unit and the power unit are electrically connected one another via the second substrate and the data storage device is electrically connected to the second substrate via the data interface. The present invention has features as follows: (a) the digital key's USB connector is inserted into the terminal device's USB port; (b) a certification program is executed by the terminal device; (c) a verification code is created by the certification program and passed to a decoding program via the connection unit of the terminal device and the network unit; (d) the verification code is compared with the data storage device; (e) the data storage device is accessed by the terminal device via the network unit.

The purposes and technical features with respect to the present invention are further fulfilled by technical measures as follows.

In the above security information sharing system, the certification program can be saved in the first memory unit.

In the above security information sharing system, the verification code is calculated and created by the certification program based on the digital box's device number.

In the above security information sharing system, the data storage device can be either an internal storage device or an external storage device.

In the above security information sharing system, the second memory unit in the digital box comprises a synchronous program which synchronizes encoded data in the data storage device with data in a remote server.

In the above security information sharing system, the remote server comprises a corresponding list and a file storage space.

The execution method of the above security information sharing system disclosed in the present invention is based on Internet or Local Area Network and comprises steps as follows. Step 1: the digital key's USB connector is inserted into the terminal device's USB port; Step 2: the terminal device supplies power to electrically connect the digital key; Step 3: the certification program is executed by the terminal device; Step 4: the verification code for the digital key's first memory unit is calculated and created by the certification program and passed to the digital box via the terminal device's connection unit and the digital box's network unit; Step 5: the verification code is compared with the data storage device by the decoding program of the digital box and taken as a basis to completely decode information in the data storage device; Step 6: information saved in the data storage device is accessed by the terminal device via the network unit and the decoding program.

The purposes and technical features with respect to the present invention are further fulfilled by technical measures as follows.

In the above execution method of the security information sharing system, the verification code is calculated, created and saved in the first memory unit of the new digital key after Step 3 when the device number is caught by the certification program

In the above execution method of the security information sharing system, Step 5 is followed by an extra step: a checking string for the terminal device is created by an authorization program in the digital box and saved in a proof list of the second memory unit.

In the above execution method of the security information sharing system, the authorization program checks that the proof list has any record conforming to the checking string in the terminal device after Step 6 when the digital key on the terminal device is removed and the terminal device links the digital box via Internet again.

In the above execution method of the security information sharing system, the authorization program based on the checking string creates a temporary verification code which is passed to the decoding program and taken as a basis to completely decode information in the data storage device therein when the proof list has the checking string for the terminal device.

In the above execution method of the security information sharing system, the terminal device is able to access data in the data storage device via the network unit and the decoding program.

In contrast to the prior art, the present invention has effects as follows: (1) secure information sharing and protective data transmission between a digital box and a digital key and no data loss; (2) neither requirement to remember multiple usernames and passwords nor any relationship between a username and a password as usual; (3) security of information which is encrypted and saved in a data storage device; (4) an extra digital key newly authorized and created by one user depending on a digital box's device number and a certification program; (5) effective network traffic and backup in virtue of a local digital box and a remote server.

### BRIEF DESCRIPTIONS OF THE DRAWINGS

FIG. 1 is a first flow diagram illustrating a preferred embodiment of the present invention.
FIG. 2 is a first block diagram illustrating a preferred embodiment of the present invention.
FIG. 3 is a first schematic view illustrating a preferred embodiment of operating the present invention.
FIG. 4 is a second flow diagram illustrating a preferred embodiment of the present invention.
FIG. 5 is a second block diagram illustrating a preferred embodiment of the present invention.
FIG. 6 is a second schematic view illustrating a preferred embodiment of operating the present invention.

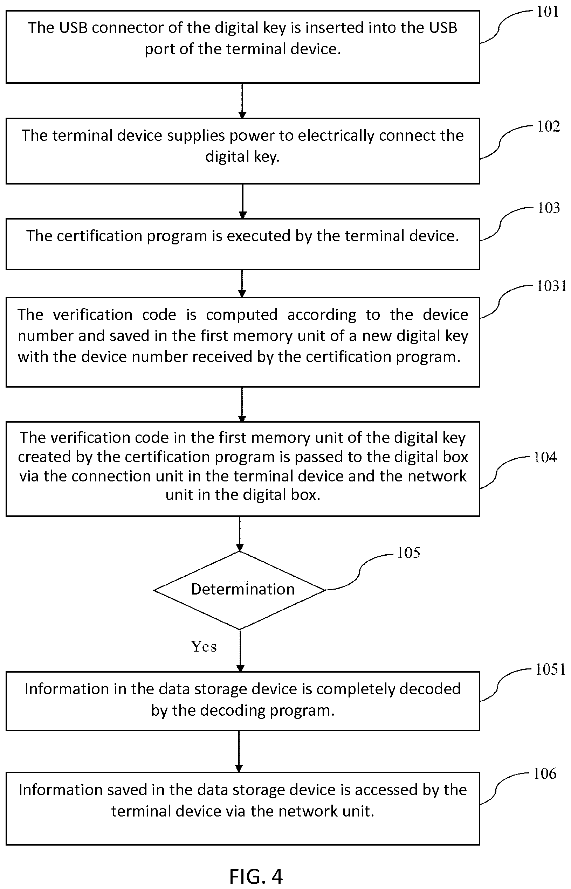

FIG. 4 is a third flow diagram illustrating a preferred embodiment of the present invention.

### DETAILED DESCRIPTIONS OF THE PREFERRED EMBODIMENTS

The preferred embodiments of the present invention are particularly disclosed hereinafter to make purposes, features and effects further understood.

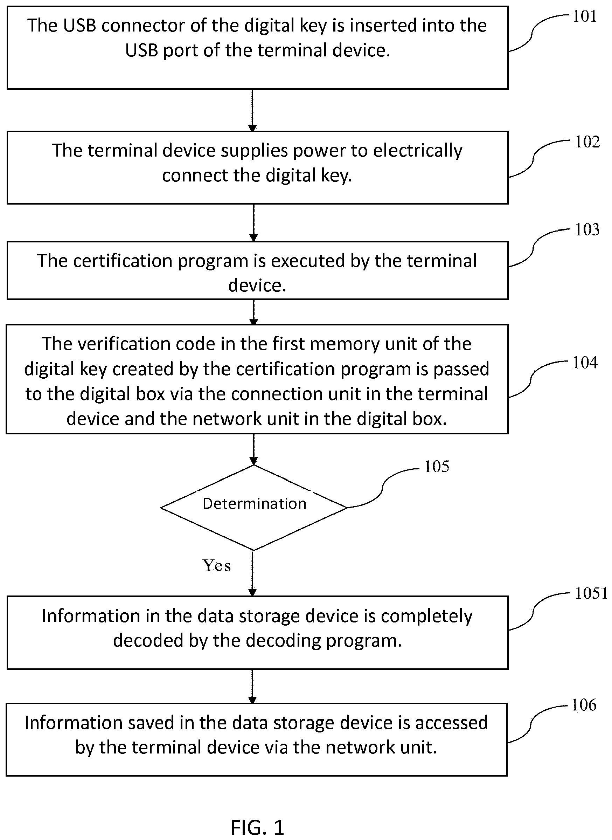

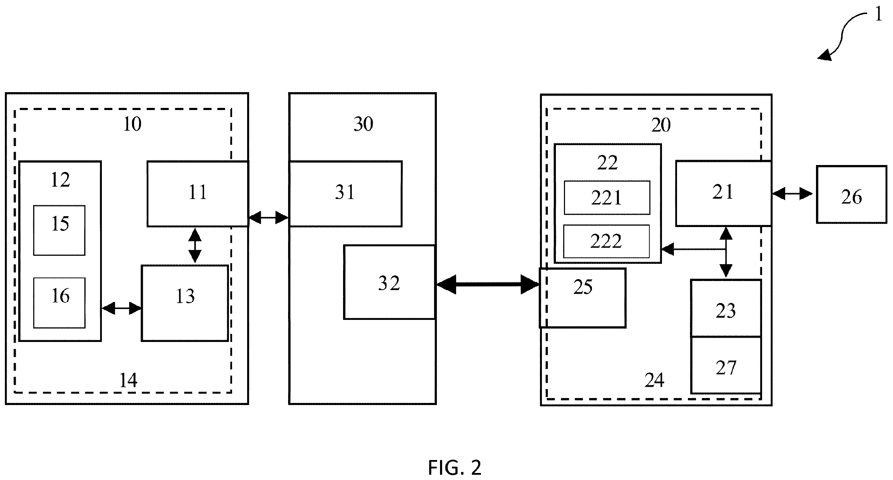

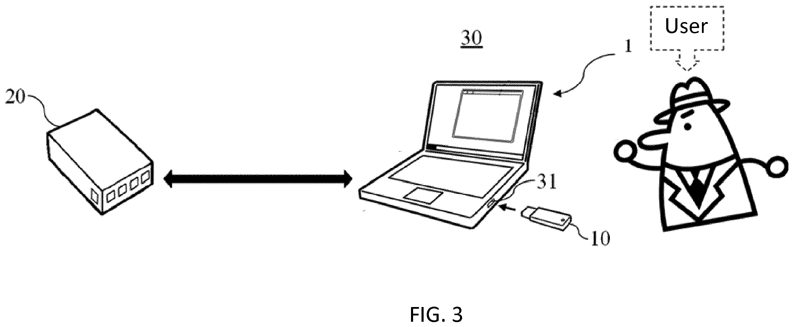

FIGS. 1 through 7 illustrate the preferred embodiments of the present invention of a security information sharing system and an execution method thereof. Referring to FIG. 2 which illustrates the present invention of a security information sharing system (1) comprises at least a digital key (10) and a digital box (20).

As shown in FIG. 2, the digital key (10) comprises a USB connector (11), a first memory unit (12), a control unit (13), a first substrate (14) and a verification code (15) saved in the first memory unit (12) wherein the USB connector (11) is electrically connected to the first memory unit (12) and the control unit (13) via the first substrate (14).

Specifically, the USB connector (11) is a male connector conforming to Universal Serial Bus (USB) standards; the first memory unit (12) consists of Non-Volatile Random-Access Memory (NVRAM) which is characteristic of data such as the verification code (15) not erased with power disconnected; the control unit (13) is a logic machine which is used to execute complicated computer programs; the first substrate (14) is usually a circuit board (e.g., a single-layered or multi-layered printed circuit board), a lead frame, a polyimide, a BT board, or an integrated circuit carrier. The first substrate (14) comprises inner circuits (not shown in the figure) as an electrically conductive interface to electrically connect the USB connector (11), the first memory unit (12) and the control unit (13) by wire bonding or flip chip technology.

Preferably, referring to FIG. 2 which illustrates hardware works well with software integrated, that is, a certification program (16) is saved in the first memory unit (12) for convenient access of one user or is downloaded to and installed in a terminal device from a data storage device or a website.

Referring to FIG. 2 again which illustrates the digital box (20) comprises at least a data interface (21), a second memory unit (22), a processing unit (23), a second substrate (24), a network unit (25), a data storage device (26) and a power unit (27): the data interface (21), the second memory unit (22), the processing unit (23), the network unit (25) and the power unit (27) are electrically connected one another via the second substrate (24); the data storage device (26) is electrically connected to the second substrate (24) via the data interface (21).

Specifically, the data interface (21) is an I/O interface between an internal storage device and an external storage device or another peripheral device and is capable of supplying power, for instance, a common female connector conforming to Universal Serial Bus (USB) standards or Serial Advanced Technology Attachment (SATA) standards and electrically connected to the second substrate (24) by welding for the purpose of the data storage device (26) electrically connected to the second substrate (24); the second memory unit (22) consists of Non-Volatile Random-Access Memory (NVRAM) which is characteristic of data such as settings or records not erased with power disconnected; the processing unit (23) is a logic machine used to execute complicated computer programs; the second substrate (24) is usually a circuit board (e.g., a single-layered or multi-layered printed circuit board), a lead frame, a polyimide, a BT board, or an integrated circuit carrier. The first substrate (14) comprises inner circuits (not shown in the figure) as an electrically conductive interface to electrically connect the data interface (21), the second memory unit (22), the processing unit (23), the network unit (25) and the power unit (27) by wire bonding or flip chip technology; the data storage device (26) is either an internal storage device or an external storage device, each of which is one media device saving digitalized messages electrically, magnetically or optically and activated through the data interface (21) or by an external power supply for electrical connection to the second substrate (24) via the data interface (21) and control of accessing (writing) via the processing unit (23).

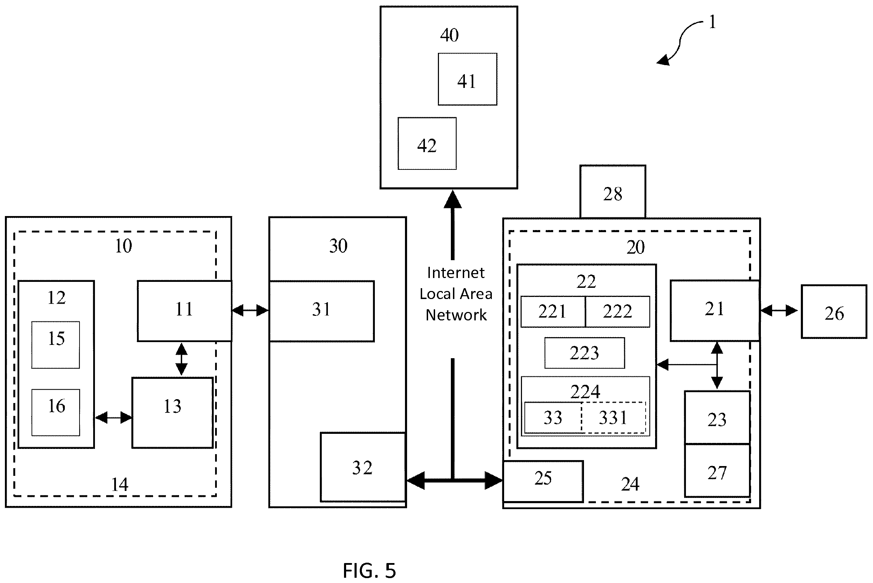

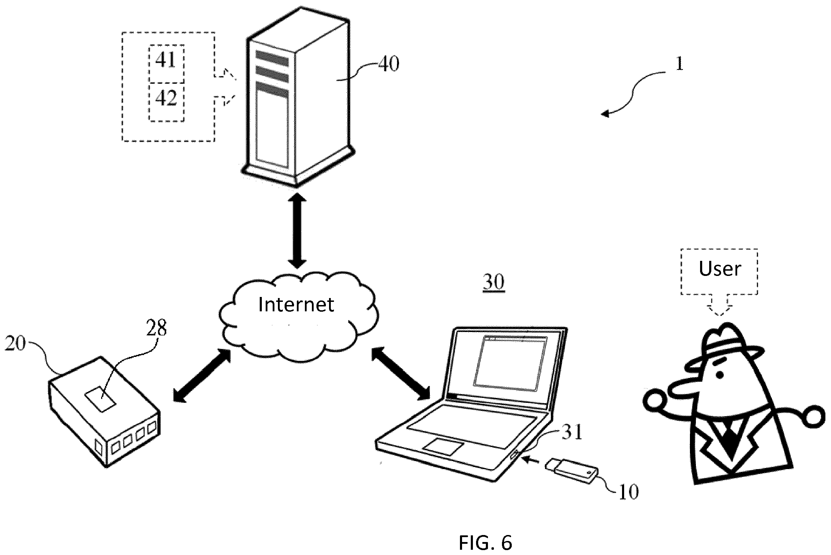

Preferably, referring to FIGS. 5 and 6 which illustrate the digital box (20) has a device number (28) (a unique identification number of the digital box (20)) on its surface as a basis to create a new verification code (15) calculated and created by the certification program (16). It is convenient that the data storage device (26) is either an internal storage device or an external storage device which features preferred interchangeability. Referring to FIG. 5 which illustrates the second memory unit (22) in the digital box (20) comprises a synchronous program (222) being capable of synchronizing encoded data in the data storage device (26) with data in a remote server (40); the remote server (40) comprises a corresponding list (41) and a file storage space (42) which corresponds to a storage space in the digital box (20) and is within architecture of the remote server (40); the corresponding list (41) is used to record information saved in the file storage space (42).

Referring to FIGS. 1, 2 and 3 which illustrate an execution method of the present invention of a security information sharing system based on Internet or Local Area Network for execution of the information sharing system has steps as follows.

Step 1 (101): the USB connector (11) of the digital key (10) is inserted into the USB port (31) of the terminal device (30); Step 2 (102): the terminal device (30) supplies power to electrically connect the digital key (10); Step 3 (103): the certification program (16) is executed by the terminal device (30); Step 4 (104): a verification code in the first memory unit (12) of the digital key (10) created by the certification program (16) is passed to the digital box (20) via the connection unit (32) in the terminal device (30) and the network unit (25) in the digital box (20); Step 5 (105, 1051): the verification code (15) is compared with the data storage device (26) by the decoding program (221) of the digital box (20) and taken as a basis to completely decode information in the data storage device (26); Step 6 (106): information saved in the data storage device (26) is accessed by the terminal device (30) via the network unit (25) and the decoding program (221).

Specifically, referring to FIG. 2 which further illustrates: (a) the verification code (15) transmitted via Internet is compared with encoded data in the data storage device (26) by the decoding program (221) of the digital box (20) under the execution condition of Step 5 (105); (b) encrypted information in the data storage device (26) is completely decoded by the decoding program (221) for access based on the verification code (15) under the execution content of Step 5 (1051). As such, the present invention realizes neither encrypted information accessed from the data storage device (26) directly nor demands of a username and a password as usual.

Preferably, referring to FIGS. 2 and 4 which illustrate Step 3 (103) followed by Step 3-1 (1031) different from that of FIG. 1. Step 3-1 (1031) refers to the computable verification code (15) based on the device number (28) and saved in the first memory unit (12) of a new digital key (10) with the device number (28) of the digital box (20) received by the certification program (16). As such, the digital key (10) can be newly authorized by certification program (16) as well as the device number (28) of the digital box (20) without any quantitative restriction.

As shown in FIGS. 5 and 6, information saved in both the remote server (40) and the data storage device (26) can be synchronously encoded by the synchronous program (222) of the digital box (20) and recorded in the corresponding list (41), for instance, shared content, file size, location to save a file, timestamp of last modification, temporarily decoded information, etc. As such, the present invention featuring the digital box (20) accessed locally and the remote server (40) accessed from an external network is of service to distribution of network traffic and reduction of costs and backups encoded information of the data storage device into the remote server (40).

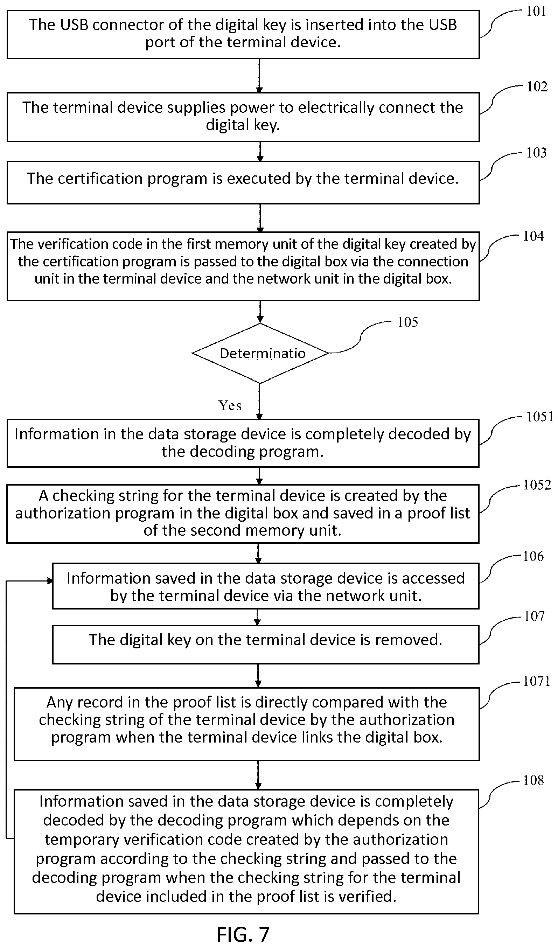

Referring to FIGS. 5 and 7 which illustrate the terminal device (30) certified by the digital key (10) once is recorded as an authorized device by the digital box (20) and the digital box (20) is accessed with no digital key (10) required. FIGS. 5 and 7 also illustrates content different from that of FIG. 1, for instance, Step 5 (105, 1051) followed by Step 5-1 (1052), Step 6 (106) followed by Step 7 (107, 1071) as well as Step 8 (108), and Step 6 (106) returned.

Step 5-1 (1052) refers to content as follows: an encoded checking string (33) is saved in a proof list (224) of the second memory unit (22) and referred to as a basis to check validity of the terminal device (30) after information saved in the data storage device (26) is accessed by the terminal device (30) via the network unit (25) as well as the decoding program (221) and some unique records of the terminal device (30) such as Media Access Control Address (MAC), hardware information and username are received by the certification program (16). The execution condition of Step 7 (107) is used to remove the digital key (10) on the terminal device (30). As shown in the execution content of Step 7 (1071), any record in the proof list (224) is directly compared with the checking string (33) of the terminal device (30) by the authorization program (223) when the terminal device (30) links the digital box (20) whose decoding program (221) does not catch the verification code (15) via Internet. As shown in Step 8 (108), information saved in the data storage device (26) is completely decoded by the decoding program (221) which depends on the temporary verification code (331) created by the authorization program (223) according to the checking string (33) and passed to the decoding program (221) when the checking string (33) for the terminal device (30) included in the proof list (224) is verified. As shown in Step 6 (106), information saved in the data storage device (26) is accessed by the terminal device (30) via the network unit (25) and the decoding program (221) again.

Accordingly, the present invention with effects different from a regular cloud structure and referred to as creative work among similar products meets patentability and is applied for the patent.

It must be reiterated that the above descriptions are preferred embodiments of the present invention only, and any equivalent change in specifications, claims, or drawings of the present invention still belongs to the technical field within the present invention with reference to claims hereinafter.

## Claims

1. An execution method of a security information sharing system (1) which includes at least a digital key (10), a digital box (20) and a terminal device (30) based on Internet or Local Area Network and comprising steps as follows:
Step 1: a USB connector (11) of the digital key (10) is inserted into a USB port (31) of the terminal device (30);
Step 2: said terminal device (30) supplies power to electrically connect said digital key (10);
Step 3: a certification program (16) saved in a first memory unit (12) of the digital key (10) for convenient access of one user is executed by said terminal device (30);
Step 3-1: the certification program (16) calculates and creates a verification code (15) based on a device number (28), which is a unique identification number of the digital box (20), and saves it in the first memory unit (12) of the digital key (10) which can be newly authorized by certification program (16);
Step 4: (a) said verification code (15) transmitted to the digital box (20) is compared with encoded data in a data storage device (26) connected to the digital box (20) by a decoding program (221) of the digital box (20); (b) encrypted information in the data storage device (26) is completely decoded by the decoding program (221) for access based on the verification code (15);
Step 5: information saved in said data storage device (26) is accessed by said terminal device (30) via a network unit (25) of the digital box (20) and said decoding program (221).

2. The execution method of a security information sharing system according to Claim 1 wherein Step 4 is followed by an extra step: a checking string (33) for said terminal device (30) is created by an authorization program (223) in said digital box (20) and saved in a proof list (224) of a second memory unit (22) of the digital box (20).

3. The execution method of a security information sharing system according to Claim 2 wherein said authorization program (223) checks that said proof list (224) has a record conforming to said checking string (33) in said terminal device (30) after Step 5 when said digital key (10) on said terminal device (30) is removed and said terminal device (30) links said digital box (20) via Internet again.

4. The execution method of a security information sharing system according to Claim 3 wherein said authorization program (223) based on said checking string (33) creates a temporary verification code (331) which is passed to said decoding program (221) and taken as a basis to completely decode information in said data storage device (26) therein when said proof list (224) has said checking string (33) for said terminal device (30).

## Patentansprüche

1. Ausführungsverfahren eines Systems zum Teilen von Sicherheitsinformation (1), das mindestens einen digitalen Schlüssel (10), eine Digitalbox (20) und ein auf dem Internet oder lokalen Netzwerk basierendes Endgerät-Gerät (30) einschließt, und umfassend die folgenden Schritte:
Schritt 1: Ein USB-Stecker (11) des digitalen Schlüssels (10) wird in einen USB-Anschluss (31) des Endgeräts (30) eingesteckt;
Schritt 2: das Endggerät (30) liefert Strom, um den digitalen Schlüssel (10) elektrisch zu verbinden;
Schritt 3: ein Zertifizierungsprogramm (16), gespeichert in einer ersten Speichereinheit (12) des digitalen Schlüssels (10) für den praktischen Zugriff eines Benutzers, wird durch das Endggerät (30) ausgeführt ;
Schritt 3-1: das Zertifizierungsprogramm (16) berechnet und erstellt einen auf einer Gerätenummer (28) basierenden Verifizierungscode (15), wobei es sich um eine eindeutige Identifizierungsnummer der Digitalbox (20) handelt, und speichert ihn in der ersten Speichereinheit (12) des digitalen Schlüssels (10), der mit dem Zertifizierungsprogramm (16) neu autorisiert werden kann;
Schritt 4: (a) der an die Digitalbox (20) übertragene Verifizierungscode (15) wird mit kodierten Daten in einer Datenspeichervorrichtung (26), verbunden mit der Digitalbox, durch ein Dekodierungsprogramm (221) der Digitalbox (20) verglichen; (b) verschlüsselte Information in der Datenspeichervorrichtung (26) wird durch das Dekodierungsprogramm (221) für den Zugriff basierend auf dem Verifizierungscode (15) vollständig decodiert ;
Schritt 5: auf Information, gespeichert in der Datenspeichervorrichtung (26) wird durch das Endgerät (30) über eine Netzwerkeinheit (25) der Digitalbox (20) und das Dekodierungsprogramm (221) zugegriffen.

2. Ausführungsverfahren eines Systems zum Teilen von Sicherheitsinformation nach Anspruch 1, wobei dem Schritt 4 ein zusätzlicher Schritt folgt: eine Prüfzeichenfolge (33) für das Endgerät (30) wird durch ein Autorisierungsprogramm (223) in der Digitalbox (20) erstellt und in einer Nachweisliste (224) einer zweiten Speichereinheit (22) der Digitalbox (20) gespeichert.

3. Ausführungsverfahren eines Systems zum Teilen von Sicherheitsinformation nach Anspruch 2, wobei das Autorisierungsprogramm (223) überprüft, ob auf der Nachweisliste (224) eine Aufzeichnung vorhanden ist, die der Prüfzeichenfolge (33) in dem Endgerät (30) nach Schritt 5 entspricht, wenn der digitale Schlüssel (10) auf dem Endgerät (30) entfernt ist und das Endgerät (30) die Digitalbox (20) erneut über das Internet verbindet.

4. Ausführungsverfahren eines Systems zum Teilen von Sicherheitsinformation nach Anspruch 3, wobei das Autorisierungsprogramm (223) basierend auf der Prüfzeichenfolge (33) einen vorübergehenden Verifizierungscode (331) erstellt, der an das Dekodierungsprogramm (221) weitergeleitet und als Grundlage zum vollständigen Decodieren der Information in der Datenspeichervorrichtung (26) darin genommen wird, wenn auf der Nachweisliste (224) die Prüfzeichenfolge (33) für das Endgeräterät (30) vorhanden ist.

## Revendications

1. Procédé d'exécution d'un système de partage d'informations de sécurité (1) qui comprend au moins une clé numérique (10), un boîtier numérique (20) et un dispositif terminal (30) basé sur Internet ou un réseau local et comprenant les étapes suivantes :
Étape 1 : un connecteur USB (11) de la clé numérique (10) est inséré dans un port USB (31) du dispositif terminal (30) ;
Étape 2 : ledit dispositif terminal (30) fournit de l'énergie pour connecter électriquement ladite clé numérique (10) ;
Étape 3 : un programme de certification (16) sauvegardé dans une première unité de mémoire (12) de la clé numérique (10) pour un accès pratique par un utilisateur est exécuté par ledit dispositif terminal (30) ;
Étape 3-1: le programme de certification (16) calcule et crée un code de vérification (15) basé sur un numéro de dispositif (28), qui est un numéro d'identification unique du boîtier numérique (20), et le sauvegarde dans la première unité de mémoire (12) de la clé numérique (10) qui peut être nouvellement autorisée par le programme de certification (16) ;
Étape 4 : (a) ledit code de vérification (15) transmis au boîtier numérique (20) est comparé à des données codées dans un dispositif de stockage de données (26) connecté au boîtier numérique (20) par un programme de décodage (221) du boîtier numérique (20) ; (b) des informations cryptées dans le dispositif de stockage de données (26) sont complètement décodées par le programme de décodage (221) pour un accès basé sur le code de vérification (15) ;
Étape 5 : ledit dispositif terminal (30) accède à des informations sauvegardées dans ledit dispositif de stockage de données (26) via une unité de réseau (25) du boîtier numérique (20) et ledit programme de décodage (221).

2. Procédé d'exécution d'un système de partage d'informations de sécurité selon la revendication 1, dans lequel l'étape 4 est suivie d'une étape supplémentaire : une chaîne de contrôle (33) pour ledit dispositif terminal (30) est créée par un programme d'autorisation (223) dans ledit boîtier numérique (20) et sauvegardée dans une liste de preuves (224) d'une seconde unité de mémoire (22) du boîtier numérique (20).

3. Procédé d'exécution d'un système de partage d'informations de sécurité selon la revendication 2, dans lequel ledit programme d'autorisation (223) vérifie que ladite liste de preuves (224) a un enregistrement conforme à ladite chaîne de contrôle (33) dans ledit dispositif terminal (30) après l'étape 5 lorsque ladite clé numérique (10) sur ledit dispositif terminal (30) est retirée et que ledit dispositif terminal (30) est à nouveau relié audit boîtier numérique (20) via Internet.

4. Procédé d'exécution d'un système de partage d'informations de sécurité selon la revendication 3, dans lequel ledit programme d'autorisation (223), sur la base de ladite chaîne de contrôle (33), crée un code de vérification temporaire (331) qui est transmis audit programme de décodage (221) et pris comme base pour décoder complètement des informations dans ledit dispositif de stockage de données (26), lorsque ladite liste de preuves (224) a ladite chaîne de contrôle (33) pour ledit dispositif terminal (30).
